(19) Europäisches Patentamt
European Patent Office
Office européen des brevets

(11) EP 4 190 822 A1

(12) EUROPEAN PATENT APPLICATION

(43) Date of publication:
**07.06.2023 Bulletin 2023/23**

(21) Application number: **21212624.7**

(22) Date of filing: **06.12.2021**

(51) International Patent Classification (IPC):
***C08F 4/654*** $^{(2006.01)}$ ***C08F 10/00*** $^{(2006.01)}$

(52) Cooperative Patent Classification (CPC):
(C-Sets available)
**C08F 10/00** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Clariant International Ltd**
**4132 Muttenz (CH)**

(72) Inventors:
- **FUSHIMI, Masaki**
**65760 Eschborn (DE)**
- **WEBER, Simone**
**64754 Badisch-Schöllenbach (DE)**
- **PITARCH LOPEZ, Jesus**
**60431 Frankfurt am Main (DE)**
- **FRITZE, Cornelia**
**64342 Seeheim-Jugenheim (DE)**

(74) Representative: **Klingelhöfer, Stefan**
**Clariant Produkte (Deutschland) GmbH**
**IPM / Patent & License Management**
**Arabellastraße 4a**
**81925 München (DE)**

# (54) PROCESS FOR THE PREPARATION OF A SPHERICAL SUPPORT FOR ZIEGLER-NATTA CATALYST

(57) The present invention relates to a method for adjusting the average particle size of a spherical catalyst support comprising a magnesium dihalide-ethanol adduct and a method to produce a polymerization catalyst by use of the spherical catalyst support obtained by the inventive method.

EP 4 190 822 A1

(52) Cooperative Patent Classification (CPC): (Cont.)

C-Sets
**C08F 10/00, C08F 4/651;**
**C08F 10/00, C08F 4/6545**

## Description

### BACKGROUND OF THE INVENTION

The present invention relates to a method for adjusting the average particle size of a spherical catalyst support comprising a magnesium dihalide-ethanol adduct and a method to produce a polymerization catalyst by use of the spherical catalyst support obtained by the inventive method.

It is known that spherical solid catalyst compositions for the polymerization of $\alpha$-olefins are favorable, since the obtained olefin polymer usually reproduces the shape of the catalyst component. A spherical shaped olefin polymer powder has a high bulk density and is easy to handle in polymerization plants. In particular, the pneumatic conveying of the olefin polymer powder is positively affected by the spherical shape.

WO 2012/143303 A1 describes a method of preparing catalyst supports with reduced sizes by (a) forming an emulsion between a $MgCl_2$ alcohol adduct in molten form and a liquid phase which is immiscible with the said adduct in the presence of a polyalkyl-methacrylate used as a solution having viscosity ranging from 100 to 5000 $mm^2/s$ and (b) rapidly cooling the emulsion to solidify the dispersed phase and collecting the solid adduct particles.

In US 2005/0176900 A1 the catalyst support is prepared by the addition of a surfactant to the reaction mixture, especially polyacrylates polymethacrylates and polyalkyl methacrylates are mentioned as suitable substances.

The method as disclosed in EP 2 666 791 A1 includes the controlled addition of ethanol amount to the reaction mixture of $MgCl_2$ in an immiscible liquid to influence the particle size and the span of the obtained catalyst support, while surfactants, preferably selected from the group of mono-oxygen ethers, glycol ethers, polyethers, glycols, alcohols, silicates, borates and phosphates or mixtures thereof may be added optionally.

Since the particle size of the support of the Ziegler Natta catalyst controls the size of the polymer particles resulting from the catalyzed polymerization process, it is desirable to produce Ziegler Natta catalyst having a larger particle size than obtained by conventional Ziegler Natta catalyst production without producing significant amounts of fines or particles having a larger particle size than the desired one.

Thus, the object of this invention was to provide a method for preparing spherical catalyst supports having a large average particle size and at the same time a narrow particle size distribution in a controllable manner.

The above object is achieved by a method for adjusting the average particle size of a spherical catalyst support, comprising the steps:

a) providing a liquid which is immiscible with a $MgHal_2$-ethanol adduct;
b) adding $MgHal_2$, wherein Hal is selected from the group consisting of Cl, Br and F and ethanol to the liquid and dispersing them therein to obtain a $MgHal_2$-ethanol adduct within the liquid and heating the obtained mixture such that the $MgHal_2$-ethanol adduct is melted, whereby additionally a glucamide is added at any time before or after the heating step;
c) stirring the mixture obtained after step b) at a stirring rate and for a time such that the average droplet size D50 of the $MgHal_2$-ethanol adduct is in a range of from 0.1 - 40 $\mu$m; and
d) transferring the mixture obtained in step c) into a hydrocarbon liquid cooled to a temperature in a range of from -35 °C to 0 °C to obtain solid particles of the $MgHal_2$-ethanol adduct with an average particle size D50 in the range of from 55 - 150 $\mu$m and a span ((D90- D10) / D50) in the range of from 0.70 to 1.70.

The method according to the present invention enables the production of a spherical catalyst support having a controlled large average particle size and also a narrow particle size distribution.

The present inventors found that in a given selected emulsion system, the amount and composition of the glucamide added as an surfactant to the reaction system have an influence on the stability of the droplets of the $MgHal_2$-ethanol adduct which enables an improved control of the dimensions of the spherical catalyst support obtained by the present method.

Furthermore, the present method yields spherical catalyst supports having a narrow particle size distribution, expressed as the span. The span is defined by following equation:

$$\text{Span} = \frac{D90 - D10}{D50}$$

wherein $D_{10}$, $D_{50}$ and $D_{90}$ are the equivalent volume diameters at 10 %, 50 % and 90 % cumulative volume, respectively, as it is well known to the skilled person.

The glucamide added in step b) of the inventive method has the following general structure:

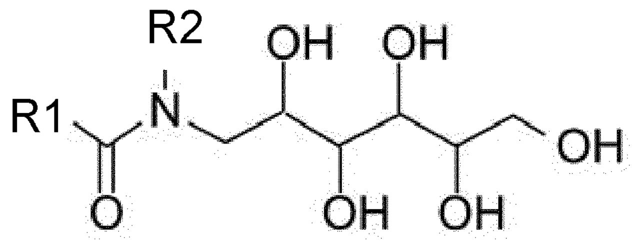

wherein R1 and R2 are independently selected from a linear or branched alkyl group. In one embodiment R1 is a linear alkyl group with 1 to 20 carbon atoms, preferably 3 to 18 carbon atoms, more preferably 5 to 16 carbon atoms, and most preferably 8 to 14 carbon atoms. In another embodiment R1 is a branched alkyl group with 3 to 20 carbon atoms, preferably 5 to 16 carbon atoms, more preferably 8 to 14 carbon atoms.

In one embodiment R2 is a linear alkyl group with 1 to 20 carbon atoms, preferably 1 to 15 carbon atoms, more preferably 1 to 10 carbon atoms, and most preferably 1 to 5 carbon atoms. In another embodiment R2 is a branched alkyl group with 3 to 20 carbon atoms, preferably 3 to 15 carbon atoms, and most preferably 3 to 10 carbon atoms.

In one embodiment the glucamide is selected from glucamides having a group R1 selected from a linear or branched alkyl group with 12 to14 carbon atoms, or a mixture thereof. One embodiment of such mixture is known as GlucoTain Clean, commercialized by Clariant. In another embodiment the glucamide is selected from glucamides having a group R1 selected from a linear or branched alkyl group with 8 to 10 carbon atoms or a mixture thereof. One embodiment of such mixture is known as Synergen GA Wet, commercialized by Clariant. In yet another embodiment the glucamide is built from coconut oil and glucose, like GlucoPure Foam, commercialized by Clariant.

In one embodiment the amount of glucamide in the suspension is in the range of from 0.1 to 15.0 wt%, preferably of from 0.5 to 10.0 wt%, more preferably of from 0.8 to 10.0 wt%, even more preferably of from 1.0 to 10.0 and most preferably of from 1.0 to 5.0 wt%, in relation to the weight of $MgHal_2$.

The $MgHal_2$-ethanol adduct is obtained in step b) as a solid compound and is heated to convert it into the molten state. Such heating is typically done at temperatures of 100 °C and higher, preferably at a temperature of from 110 - 150 °C, more preferably of from 120 - 140 °C and most preferably of from 120 - 130 °C. Preferably during the addition of the compounds to the liquid in step b) stirring takes place.

The glucamide can be added in step b) at any time before or after the heating step in step b). In one embodiment the glucamide is added after the heating step, when the $MgHal_2$-ethanol adduct is present in the molten form. In another embodiment the glucamide is added before the heating step, whereas the glucamide can be added either separately or solved in ethanol.

Afterwards, the mixture is stirred in step c) at a stirring rate and for a time until formation of $MgHal_2$ ethanol-adducts with controlled droplet size are obtained. Typical stirring rates are between 1,000 and 10,000 rpm, preferably between 1,000 and 5,000 rpm, more preferably between 1,000 and 3,000 rpm, even more preferably between 1,500 and 2,500 rpm, most preferably between 1,800 and 2,200 rpm. The stirring time is typically between 15 - 120 minutes, preferably between 30 - 60 minutes, more preferably between 30 - 45 minutes. The mixture obtained after step c) is present as an emulsion. In one embodiment the temperature at step c) differs from the temperature after heating in step b) by - 10 °C to + 10 °C. In a further embodiment the temperature in step c) is the same temperature after heating in step b).

The average droplet size D50 of the molten $MgHal_2$-ethanol adduct obtained in step c) is in the range of from 0.1 to 40 μm, preferably in the range of from 0.5 to 40 μm, more preferably in the range of from 1.0 to 40 μm, most preferably 1.0 to 20 μm.

In step d) the mixture obtained in step c) is transferred into a hydrocarbon liquid cooled to a temperature in a range of -35 °C to 0 °C. The cooling temperature is preferably in the range of from -30 °C to 0 °C, more preferably in the range of from -30 °C to -10 °C, most preferred in the range of from -30 °C to -20 °C. The droplets of the $MgHal_2$-ethanol adduct present in the mixture obtained in step c) can partly merge before solidification under the conditions of step d).

In one embodiment of the invention the hydrocarbon liquid in step d) is stirred, while the mixture comprising the molten $MgHal_2$-ethanol adduct is transferred into the liquid.

The hydrocarbon liquid in step d) is selected from aliphatic or aromatic hydrocarbon liquids.

Aliphatic hydrocarbons may be saturated or unsaturated linear, branched or cyclic aliphatic hydrocarbons. Preferably the aliphatic hydrocarbons are saturated linear or branched hydrocarbons having at least 6 carbon atoms, such as for instance hexane, octane, nonane, decane, dodecane, etc. and their structural isomers, or mixtures thereof.

Aromatic hydrocarbons may be aromatic or heteroaromatic hydrocarbons having one or more aromatic cores. Preferably the aromatic hydrocarbons have at least 6 carbon atoms and are selected from the group consisting of benzene, toluene, xylenes, mesitylene, etc. and their structural isomers, or mixtures thereof.

In one embodiment the hydrocarbon liquid is stirred, while the mixture obtained in step c) is transferred into such hydrocarbon liquid. In another embodiment the hydrocarbon liquid is not stirred during the transfer of the mixture

into the hydrocarbon liquid.

The average particle size D50 of the solidified $MgHal_2$-ethanol adduct obtained after step d) is in the range of from 55 μm to 150 μm, preferably in the range of from 65 μm to 150 μm, more preferably in the range of from 65 μm to 100 μm, even more preferably in the range of from 65 μm to 90 μm and most preferably in the range of from 65 μm to 80 μm.

It is preferred that the liquid of step a) is an oily liquid. It is furthermore preferred that the liquid is inert towards a reaction with the spherical catalyst support formed. Suitable liquids used in the process according to the invention are silicone oils, aliphatic hydrocarbons having at least 8 carbon atoms and aromatic hydrocarbons having at least 6 carbon atoms.

Examples for linear polysiloxanes can preferably be selected from the group consisting of polydimethylsiloxane, polydiethylsiloxane, polydipropylsiloxane, polymethylphenylsiloxane, polymethylhydrogensiloxane, polyhexamethyldisiloxane, polydecamethyltetrasiloxane, polytetracosamethylundecasiloxane, poly-3-hydroheptamethyltrisiloxane, poly-3,5-dihydrooctamethyltetrasiloxane, poly-3,5,7-trihydrononamethylpentasiloxane, polytetramethyl-1,3-diphenyldisiloxane, polypentamethyl-1,3,5-triphenyltrisiloxane, polyheptaphenyldisiloxane and polyoctaphenyltrisiloxane.

Examples for cyclopolysiloxanes can preferably be selected from the group consisting of poly-2,4,6-trimethylcyclotrisiloxane, poly-2,4,6,8-tetramethylcyclotetrasiloxane, polyhexamethylcyclotrisiloxane, polyoctamethylcyclotetrasiloxane, polydecamethylcyclopentasiloxane, polydodecamethylcyclohexasiloxane, polytriphenyl-1,3,5-trimethylcyclotrisiloxane, polyhexaphenylcyclotrisiloxane and polyoctaphenylcyclotetrasiloxane.

From the above mentioned liquids, silicone oils are most preferred, since they are inert towards a reaction with the materials used for the inventive method and stable under the thermal conditions of such method.

Thus, according to a preferred embodiment of the present invention, the liquid in step a) is consisting of a silicone oil.

According to a preferred embodiment of the present invention, the silicone oil is selected from the group consisting of polydimethylsiloxane, polydiethylsiloxane and polydipropylsiloxane.

The viscosity of the silicone oil is selected from being in the range of from $0.1 \cdot 10^{-6}$ to 1000 $10^{-6}$ $m^2/s$, preferably from $1 \cdot 10^{-6}$ to $500 \cdot 10^{-6}$ $m^2/s$, and more preferably from $10 \cdot 10^{-6}$ to $350 \cdot 10^{-6}$ $m^2/s$, measured at 25 °C.

According to a preferred embodiment of the present invention the ethanol is added in step b) in such an amount that the molar ratio of ethanol to $MgHal_2$ is in the range of from 0.1 to 6, preferably 1 to 4 and most preferably 1.5 to 3.

The halide Hal in the general formula $MgHal_2$ is selected from the group consisting of Cl, Br and F. According to a preferred embodiment of the present invention, Hal is Cl.

Under the conditions of step b) a reaction by MgHal2 and ethanol takes place, which results in the formation of an MgHal2-ethanol adduct, which can be generally described by the formula $MgHal_2 \cdot n \cdot$ethanol, wherein n typically is in a range of from 1 to 6.

The spherical catalyst support in form of particles of a $MgHal_2$-ethanol adduct obtained after step d) typically comprises residues of the glucamide in a range from 0.0001 to 0.5 weight% in relation to the $MgHal_2$-ethanol adduct.

The spherical catalyst support obtained by the method according to the present invention has a substantially spherical shape, a small average particle size and a narrow particle size distribution.

The span ((D90 - D10) / D50) preferably has a value in the range of from 0.70 to 1.70, more preferably in the range of from 0.70 to 1.65, even more preferably in the range of from 0.70 to 1.60.

The average particle size D50 of the spherical catalyst support is in the range of from 55 μm to 150 μm, preferably in the range of from 65 μm to 150 μm, more preferably in the range of from 65 μm to 100 μm, even more preferably in the range of from 65 μm to 90 μm, and most preferably in the range of from 65 μm to 80 μm.

According to a preferred embodiment of the present invention, the amount of ethanol in the catalyst support is characterized by a molar ratio of ethanol to $MgHal_2$ being in a range of from 2.0 to 4.0, in particular in a range of 2.8 to 3.5.

The spherical catalyst support obtained after step d) can subsequently be used for the preparation of a polymerization catalyst. The present spherical catalyst support is treated with an electron donor, which is called an internal donor, and furthermore with a Ti-containing compound once or several times. If the polymerization catalyst comprises only one internal donor compound, the internal donor compound can be added in one or several treatment steps. If the polymerization catalyst comprises more than one internal donor compound, the internal donor compounds are either added contemporaneously or, if the treatment with the Ti-containing compound is done in several steps, the internal donor compounds can be added consecutively in all possible ways.

Prior to the treatment with the Ti-containing compound, the support can be dried and/or dealcoholated after the solidification to alter the molar ratio of ethanol to $MgHal_2$, which is usually between 1.5 and 2.9 after such drying or dealcoholizing step. The drying and dealcoholizing method can be carried out at elevated temperatures between 50 °C and 130 °C and/or at a reduced pressure.

According to a preferred embodiment of the present invention, the Ti-containing compound is represented by the general formula Ti $(OR)_m$-$xY_x$, wherein R is a linear C1-C10-alkyl group or branched C3-10-alkyl group, Y is Cl, Br or I, m is 3 or 4 and x is 1, 2, 3 or 4.

A preferred Ti-containing compound is $TiCl_4$.

In another preparation method, the spherical catalyst support according to the present invention is milled together with the at least one internal donor and is subsequently treated with a solution of $TiCl_4$. Generally, the obtained product of both preparation methods is washed with a hydrocarbon to remove undesired by-products.

In another preparation method the spherical catalyst support being obtained after step d) of the inventive method is filtered to separate the liquid provided in step a), and washed with a hydrocarbon, which is a hydrocarbon selected from the group of hydrocarbons used in step d) of the inventive method. After the washing step the spherical support, optionally suspended in hexane or $TiCl_4$, is treated with an electron donor, which is called an internal donor, and furthermore with a Ti-containing compound once or several times.

After the washing step the content of residual liquid added in step a) and being present in the support material is at most 1 wt%, preferably at most 0.5 wt%, more preferably at most 0.2 wt% and most preferred at most 0.1 wt%.

The internal donor compounds can be selected from one or more compounds of the group consisting of phthalates, diethers, succinates and glycols. Preferred combinations of electron donor compounds comprise mixtures of phthalate and diether, phthalate and succinate or phthalate and glycol. Preferably a diether, more preferably a 1,3-diether is chosen as internal donor.

According to a preferred embodiment of the present invention, the weight ratio of the spherical catalyst support to the internal donor compound in the solid catalyst composition is in the range of from 0.1 to 50.

According to an embodiment of the present invention, the molar ratio of magnesium to titanium in the solid catalyst composition is in the range of from 1:100 and 1:5, preferably in the range of from 1:50 to 1:5, and most preferably in the range of from 1:25 to 1:5

Based on the methods described above, one method for preparing the solid catalyst composition according to the present invention comprises the treatment of the spherical catalyst support according to the present invention with a solution of the Ti-containing compound and one or more internal donor compounds at an elevated temperature for a certain period, typically 1 to 3 hours. The elevated temperature is preferably in a range of from 50 to 150 °C, more preferably in a range of from 100 to 125 °C and most preferably in a range of from 100 to 120 °C. After this treatment, the obtained product is preferably washed with a hydrocarbon solvent until all undesired by-products are essentially removed.

The solid catalyst composition may be further activated with a chlorocarbon, such as chlorobenzene, chloromethane, dichloromethane or 1,2-dichloroethane, at an elevated temperature for a period of 1 to 10 hours, and is preferably subsequently washed with an inert hydrocarbon solvent.

In yet another method, the spherical catalyst support, which is optionally dried and/or dealcoholated, is suspended in a cold $TiCl_4$ solution and the obtained suspension is heated up to a temperature between 70 °C and 150 °C and kept at this temperature for 0.5 hours to 3 hours. This procedure can be carried out one or more times. The at least one internal donor compound is either added to the $TiCl_4$ suspension together in one step or added separately in one or more steps. Subsequently, the obtained product is preferably washed with an inert hydrocarbon to remove undesired by-products and excess $TiCl_4$.

The catalyst obtained by the method according to the present invention can be used for the polymerization of olefins, in particular $\alpha$-olefins.

In order to initiate the olefin polymerization, the above described solid catalyst composition has to be activated. The activation of the solid catalyst composition is preferably accomplished by the reaction of the solid catalyst composition with an organoaluminum compound.

The solid catalyst composition obtained by the method according to the present invention is particularly suitable for the polymerization of $\alpha$-olefins having the general formula $H_2C=CHR$, wherein R is hydrogen or a linear or branched alkyl group with 1 to 8 carbon atoms. The activation method comprises the following steps:

a) providing a solid catalyst composition according to the present invention and
b) reacting the solid catalyst composition with at least one organoaluminum compound having the general formula $AlR_n X_{3-n}$ , wherein R is H or an alkyl group containing 1 to 20 carbon atoms, X is halogen and $1 < n \leq 3$, in the presence of at least one external electron donor compound.

Preferably, the organoaluminum compound $AlR_nX_{3-n}$ is an alkylaluminum compound selected from the group consisting of trialkyl aluminum compounds, alkyl aluminum halides and alkyl aluminum hydrides. In particular, preferred organoaluminum compounds $AlR_nX_{3-n}$ are selected from the group consisting of triethyl aluminum, tributylaluminum, triisobutyl aluminum, and diethyl aluminum chloride.

If propylene is polymerized with an activated solid catalyst composition according to the present invention it is desired to yield a polymer with a high isotacticity or isotactic index. In order to achieve a polymer with high isotacticity, an external electron donor is preferably added to the solid catalyst composition prior to the polymerization. The use of such an external electron donor usually increases the isotacticity of the polymer compared to a polymerization conducted

without the external electron donor.

It is widely known that silicon compounds having the general formula $R^1_aR^2_bSi(OR^3)_c$ can be used as external electron donors, wherein $R^1$ and $R^2$ are alkyl groups containing 1 to 18 carbon atoms, wherein selected carbon atoms can be exchanged by heteroatoms, wherein preferred $R^1$ and $R^2$ groups are side-chain alkyl groups, alkenyl, alkylidene, naphthenic or aromatic groups, $R^3$ is an alkyl group containing 1 to 18 carbon atoms, wherein selected carbon atoms can be exchanged by heteroatoms, wherein preferred $R^3$ groups are alkyl groups, especially methyl, a and b each are independently of each other an integer of from 0 to 2, preferably 1, and c is an integer of from 1 to 3, preferably 2.

Preferably used external electron donors are cyclohexylmethyldimethoxysilane, diisopropyldimethoxysilane, dibutyldimethoxysilane, diisobutyldimethoxysilane, diphenyldimethoxysilane, methyl-tert-butyldimethoxysilane, dicyclopentyldimethoxysilane, 2-(ethyl)pyridyl-2-tert-butyldimethoxysilane, 1,1,1-trifluoro-2-propyl-2-(ethyl)pyridyl-2-tert-butyldimethoxysilane and 1,1,1-trifluoro-2-propylmethyldimethoxysilane.

Furthermore, preferred silicon compounds having the above-mentioned formula also contain a branched alkyl group or a naphthenic group and optionally contain heteroatoms. These preferred silicon compounds include for example cyclohexyltrimethoxysilane, tert-butyltrimethoxysilane and tert-hexyltrimethoxysilane.

Silicon-free external electron donors may be selected from the group consisting of 1,3-diethers, such as 9,9-bis(methoxymethyl)fluorene, esters, such as 4-ethoxybenzoate, ketones, amines and heterocyclic compounds, such as 2,2,6,6-tetramethylpiperidine.

As described above, the use of external electron donors during the polymerization of olefins, in particular propylene, yields polymers with high isotacticity and low xylene solubility (expressed as xylene soluble (XS) amount), respectively. The amount of external electron donor added to the polymerization is usually expressed as the molar ratio between the organoaluminum compound and the added external electron donor.

To control the XS value within a desired range, the external electron donor is usually added in a molar ratio between the organoaluminum compound and the added external electron donor of 0.1 to 400, more preferred of 1 to 350 and most preferred of 3 to 250.

The polymerization catalyst obtained by the method according to the present invention can be used in the polymerization of various olefins, in particular $\alpha$-olefins having the general formula $CH_2$=CHR, as mentioned above, including ethylene, propene, 1-butene, 4-methyl-1-pentene, 1-hexene and 1-octene. According to a preferred embodiment the polymerization catalyst according to the present invention is used for the polymerization of propylene and the copolymerization of propylene and ethylene. The polymerization catalyst according to the present invention is especially suitable for the production of polypropylene having a broader molecular weight distribution, higher isotacticity and higher activity compared to polypropylenes obtained with known catalysts. Of particular interest are polymers having a MWD (molecular weight distribution) of more than 4, a xylene soluble fraction below 5 % and an activity of more than or equal to 20 kg PP/(g catalyst h).

The known production methods for polymers are diverse and can be divided in several groups. In the first group of methods the polymerization takes place in slurry phase, whereas either an inert hydrocarbon or a bulk phase, wherein the liquid monomer, for example propylene, serving as the reaction medium, is used. The second group of methods includes the so-called gas-phase method, wherein the monomer is polymerized in either agitated or fluidized bed reactors.

In all those methods the reaction conditions are very similar. The temperature during the polymerization is usually from 20 °C to 120 °C, preferably from 40 °C to 80 °C, and the pressure is usually in a range of from 5 bar to 100 bar, and in particular during a gas-phase polymerization preferably in a range of from 1 and 50 bar and during a slurry bulk polymerization in a range of from 1 bar to 60 bar. Further to the monomer, hydrogen is fed to the reactor in desired quantities to control the molecular weight of the polymer.

The present invention is further illustrated by the following examples, which do not limit the scope of the present invention.

## Examples

### Measurement of the droplet size in the emulsion

Particle Track with Focused Beam Reflectance Measurement (FBRM, obtained from Mettler Toledo, Germany) was used to measure the median size D50 of droplets in the emulsion. The median size in $\mu$m was shown based on a chord length.

### Average particle size and particle size distribution

A Malvern Mastersizer (obtained from Malvern Instruments GmbH, Germany) was used to measure the average particle size and the particle size distribution of the spherical catalyst support. For the measurement, the spherical catalyst support was suspended in n-hexane (A.R. grade). The span (particle size distribution) was determined according

to following equation: span = (D90- D10) / D50.

### Elemental analysis

Elemental analysis of the supports and catalysts has been carried out by an inductively coupled plasma emission spectroscopy (ICP) and the analysis of the organic compounds has been conducted by a gas chromatography (GC).

### Support preparation

### Comparative Example 1: Comparative Support 1

Step 1: In a 1,000 ml 3-neck round bottom flask fitted with a heating mantle, a $N_2$ inlet, a stirrer and a dripping funnel for the addition of dry ethanol and other liquid substances, 560 ml of silicone oil (viscosity 100 $10^{-6}$ $m^2/s$ (at 25 °C) from Dow Corning Corporation) were added. Then 20 g (0.21 mol) of anhydrous $MgCl_2$ (from SRC) were added. The mixture was stirred until the $MgCl_2$ was dispersed. Subsequently, 38 mL of dry ethanol was transferred to the mixture via the dripping funnel and the mixture was heated up to 125 °C within 1 hour. Subsequently stirring of the mixture at this temperature was started at a stirring rate of 1,000 rpm for 30 minutes. After this time the droplet size distribution was determined via Inline PSD (Particle Size Distribution) measurement. Afterwards the stirring rate was increased to 2,000 rpm for 60 minutes, followed by a further particle size determination via PSD measurement. Subsequently, the mixture was transferred to a second flask.

Step 2: In the second flask, 2,400 ml hexane were charged and cooled to -30 °C. The complete mixture from the first flask was transferred into the cooled hexane to solidify the substantially spherical particles of the adduct. Subsequently the solidified particles were washed several times with hexane until the oil content was less than 0.2 wt%, and then dried. Finally, the average particle size and particle size distribution of the washed and dried particles were measured.

### Example 1: Support 1

Step 1: In a 1,000 ml 3-neck round bottom flask fitted with a heating mantle, a N2 inlet, a stirrer and a dripping funnel for the addition of dry ethanol and other liquid substances, 560 ml of silicone oil (viscosity 100 $10^{-6}$ $m^2/s$ (at 25 °C), from Dow Corning Corporation) were added. Then 20 g (0.21 mol) of anhydrous $MgCl_2$ (from SRC) were added. The mixture was stirred until the $MgCl_2$ was dispersed. Subsequently, 38 mL of dry ethanol and 0.6 g glucamide N-decanoyl-N-methylglucamine were transferred to the mixture via the dripping funnel and the mixture was heated up to 125 °C within 1 hour. Subsequently stirring of the mixture at this temperature was started at a stirring rate of 1,000 rpm for 30 minutes. After this time particle size distribution was determined via Inline PSD measurement. Afterwards the stirring rate was increased to 2,000 rpm for 60 minutes, followed by a further particle size determination via PSD measurement. Subsequently, the mixture was transferred to a second flask.

Step 2: In the second flask, 2,400 ml hexane were charged and cooled to -30 °C. The complete mixture from the first flask was transferred into the cooled hexane to solidify the substantially spherical particles of the adduct. Subsequently the solidified particles were washed several times with hexane until the oil content was less than 0.2 wt%, and then dried. Finally, the average particle size and particle size distribution of the washed and dried catalyst support particles were measured.

Example 2 to 7: **Supports 2 to 7**

Example 2 to 7 were prepared the same way as Example 1, with the exception that different amounts and kind of glucamides in accordance with Table 1 were selected.

Table 1 lists the process conditions and resulting properties of the catalyst supports.

| Example | Surfactant | Surfactant amount [wt.-%] | Average droplet size D50 in the emulsion [µm] | D10 of the support [µm] | D50 of the support [µm] | D90 of the support [µm] | Span of the support [-] | Molar $MgCl_2$-n Ethanol ratio in the support [-] |
|---|---|---|---|---|---|---|---|---|
| Comparative Example 1 | - | - | 24.1 | 28.7 | 53.5 | 90.2 | 1.15 | 2.8 |
| Example 1 | N-decanoyl-N-methylglucamine | 3.0 | 22.5 | 36.2 | 68.3 | 117.4 | 1.18 | 2.2 |
| Example 2 | GlucoPure Foam RM | 0.5 | n/a | 29.7 | 55.3 | 95.6 | 1.20 | 2.9 |
| Example 3 | GlucoPure Foam RM | 1.0 | n/a | 21.7 | 57.4 | 115.0 | 1.63 | 3.1 |
| Example 4 | GlucoPure Foam RM | 3.0 | 16.6 | 28.7 | 67.1 | 136.0 | 1.60 | 3.2 |
| Example 5 | GlucoPure Foam RM | 5.0 | n/a | 33.1 | 77.2 | 156.7 | 1.60 | 2.9 |
| Example 6 | Synergen GA WET RM DEG 4426218 | 3.0 | 18.3 | 36.1 | 81.5 | 161.9 | 1.55 | 2.9 |
| Example 7 | GlucoTain Clean RM | 3.0 | n/a | 35.5 | 67.2 | 126.0 | 1.35 | 2.8 |

**Example 8: Catalyst 1**

Into a 1.0 liter double jacket glass reactor fitted with a stirrer, 650 $cm^3$ of $TiCl_4$ at -10 °C were introduced at room temperature, and whilst stirring 20.5 g of the support prepared in Example 3 were added. The mixture was heated to 40 °C over a period of 60 minutes. At that temperature Di-iso-butyl phthalate (DIBP) as internal donor was charged in an amount to result in a Mg/donor molar ratio of 8. This mixture was heated to 100 °C over a period of 120 minutes and maintained at this temperature for 60 minutes. The stirring was stopped then and after 15 minutes the liquid phase is separated from the settled solid. A further treatment of the settled solid was carried out by adding 650 $cm^3$ of $TiCl_4$ and heating the mixture to 110 °C within 10 minutes and maintaining said conditions for 30 minutes under stirring. The stirring was then discontinued and after 15 minutes the liquid phase was separated from the settled solid maintaining the temperature at 110 °C. Three further treatments of the solid were carried out adding 650 $cm^3$ of $TiCl_4$ and heating the mixture to 120 °C within 10 minutes, and maintaining said conditions for 60 min under stirring. The stirring was then discontinued and after 15 minutes the liquid phase was separated from the settled solid maintaining the temperature at 120 °C. Thereafter, 3 washings with 750 $cm^3$ of anhydrous hexane at 60 °C and 3 washings with 750 $cm^3$ of anhydrous hexane at room temperature were carried out. The solid catalyst component obtained was then dried under vacuum in a nitrogen environment at room temperature. The elemental analysis showed a titanium content of 3.3 weight-%, a magnesium content of 16.8 weight-%, a DIBP content of 13.4 weight-%, and a glucamide content of weight-%. The D50 value was determined to be 43.4 μm, the span was determined to be 1.22.

## Claims

1. A method for adjusting the average particle size of a spherical catalyst support, comprising the steps:

   a) providing a liquid which is immiscible with a $MgHal_2$-ethanol adduct;
   b) adding $MgHal_2$, wherein Hal is selected from the group consisting of Cl, Br and F, and ethanol to the liquid and dispersing them therein to obtain a MgHal2-ethanol adduct within the liquid and heating the obtained mixture such that the MgHal2-ethanol adduct is melted, whereby additionally a glucamide is added at any time before or after the heating step;
   c) stirring the mixture obtained after step b) at a stirring rate and for a time such that the average droplet size D50 of the MgHal2-ethanol adduct is in a range of from 0.1 - 40 μm; and
   d) transferring the homogenized mixture obtained in step c) into a hydrocarbon liquid cooled to a temperature in a range of from -35 °C to 0 °C to obtain solid particles of the $MgHal_2$-ethanol adduct with an average particle size D50 in the range of from 55 - 150 μm and a span ((D90- D10) / D50) in the range of from 0.70 to 1.70.

2. The method according to claim 1, wherein the glucamide has the following general structure

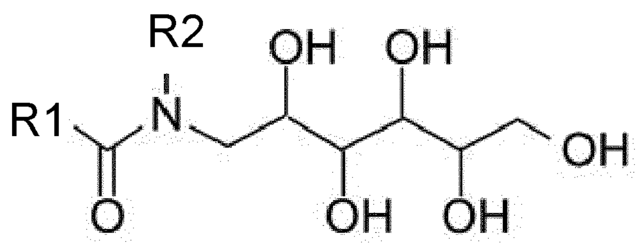

   wherein R1 and R2 are independently selected from a linear or branched alkyl group.

3. The method according to claim 2, wherein R1 is a linear alkyl group with 1 to 20 carbon atoms, preferably 3 to 18 carbon atoms, more preferably 5 to 16 carbon atoms, and most preferably 8 to 14 carbon atoms.

4. The method according to claim 2 or 3, wherein R1 is a branched alkyl group with 3 to 20 carbon atoms, preferably 5 to 16 carbon atoms, more preferably 8 to 14 carbon atoms.

5. The method according to any of claims 2 to 4, wherein R2 is a linear alkyl group with 1 to 20 carbon atoms, preferably 1 to 15 carbon atoms, more preferably 1 to 10 carbon atoms, and most preferably 1 to 5 carbon atoms.

6. The method according to any of claims 2 to 5, wherein R2 is a branched alkyl group with 3 to 20 carbon atoms,

preferably 3 to 15 carbon atoms, and most preferably 3 to 10 carbon atoms.

**7.** The method according to any of claims 2 to 6, wherein the glucamide is selected from glucamides having a group R1 selected from a linear or branched alkyl group with 12 to14 carbon atoms, or a mixture thereof.

**8.** The method according to any of claims 2 to 7, wherein the glucamide is selected from glucamides having a group R1 selected from a linear or branched alkyl group with 8 to10 carbon atoms or a mixture thereof.

**9.** The method according to any of claims 1 to 8, wherein the liquid in step a) is a silicone oil.

**10.** The method according to any of claims 1 to 9, wherein Hal is Cl.

**11.** The method according to any of claims 1 to 10, wherein the stirring rate in step c) is between 1,000 and 10,000 rpm, preferably between 1,000 and 5,000 rpm, more preferably between 1,000 and 3,000 rpm, even more preferably between 1,500 and 2,500 rpm, most preferably between 1,800 and 2,200 rpm.

**12.** The method according to any of claims 1 to 11, wherein stirring in step c) takes time for 15 - 120 minutes, preferably for 30 - 60 minutes, more preferably for 30 - 45 minutes.

**13.** The method according to any of claims 1 to 12, wherein the amount of glucamide in the suspension is in the range of from 0.1 to 15.0 wt%, preferably of from 0.5 to 10.0 wt%, more preferably of from 0.8 to 10.0 wt%,even more preferably of from 1.0 to 10.0 and most preferably of from 1.0 to 5.0 wt%, in relation to the weight of MgHal2.

**14.** The method according to any of claims 1 to 13, wherein heating in step b) is done at a temperature of 100 °C and higher, preferably at a temperature of from 110 - 150 °C, more preferably of from 120 - 140 °C and most preferably of from 120 - 130 °C.

**15.** The method according to any of claims 1 to 14, wherein the average particle size D50 of the $MgHal_2$-ethanol adduct obtained after step d) is in the range of from 65 to 150 μm, preferably in the range of from 65 μm to 100 μm, more preferably in the range of from 65 μm to 90 μm, and most preferably in the range of from 65 μm to 80 μm.

**16.** A method to produce a polymerization catalyst, wherein the $MgHal_2$-ethanol adduct obtained by the method according to any of claims 1 to 15 is used as catalyst support.

**17.** The method according to claim 16, wherein the $MgHal_2$-ethanol adduct is treated with an electron donor and with a Ti-containing compound.

**18.** The method according to any of claims 16 or 17, wherein the Ti-containing compound is represented by the general formula Ti $(OR)_m$-$xY_x$, wherein R is a linear C1-C10-alkyl group or branched C3-10-alkyl group, Y is Cl, Br or I, m is 3 or 4 and x is 1, 2, 3 or 4.

**19.** The method according to any of claims 16 to 18, wherein the electron donor is selected from one or more compounds of the group of phthalates, diethers, succinates and glycols, preferably from a mixture of phthalate and diether, phthalate and succinate or phthalate and glycol, more preferably the electron donor is a 1,3-diether.

**20.** The method according to any of claims 16 to 19, wherein the $MgHal_2$-ethanol adduct is treated with a solution of the Ti-containing compound and one or more electron donor compounds at a temperature in a range of from 50 to 150 °C, preferably in a range of from 100 to 125 °C and most preferably in a range of from 100 to 120 °C.

Europäisches Patentamt
European Patent Office
Office européen des brevets

# EUROPEAN SEARCH REPORT

Application Number
EP 21 21 2624

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 666 791 A1 (CLARIANT PRODUKTE DEUTSCHLAND [DE]) 27 November 2013 (2013-11-27) * page 7; examples 1-6 * ----- | 1-20 | INV. C08F4/654 C08F10/00 |
| A | EP 2 036 928 A1 (CHINA PETROLEUM & CHEMICAL [CN]; BEIJING RES INST CHEM IND [CN]) 18 March 2009 (2009-03-18) * page 9; example 3 * ----- | 1-20 | |
| | | | TECHNICAL FIELDS SEARCHED (IPC) |
| | | | C08F |

The present search report has been drawn up for all claims

2

| Place of search | Date of completion of the search | Examiner |
|---|---|---|
| Munich | 2 June 2022 | Luka, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 21 2624

This annex lists the patent family members relating to the patent documents cited in the above-mentioned European search report. The members are as contained in the European Patent Office EDP file on
The European Patent Office is in no way liable for these particulars which are merely given for the purpose of information.

02-06-2022

| Patent document cited in search report | Publication date | Patent family member(s) | Publication date |
|---|---|---|---|
| EP 2666791 A1 | 27-11-2013 | EP 2666791 A1 | 27-11-2013 |
| | | ES 2655638 T3 | 21-02-2018 |
| | | US 2013331529 A1 | 12-12-2013 |
| EP 2036928 A1 | 18-03-2009 | BR PI0709454 A2 | 12-07-2011 |
| | | EP 2036928 A1 | 18-03-2009 |
| | | KR 20080112360 A | 24-12-2008 |
| | | MY 151043 A | 31-03-2014 |
| | | SG 189559 A1 | 31-05-2013 |
| | | US 2010099833 A1 | 22-04-2010 |
| | | WO 2007112700 A1 | 11-10-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012143303 A1
- US 20050176900 A1
- EP 2666791 A1